# EUROPÄISCHE PATENTSCHRIFT

(11) **EP 2 525 126 B1**
(45) Veröffentlichungstag und Bekanntmachung des Hinweises auf die Patenterteilung: **12.04.2017**
(21) Anmeldenummer: 12001337.0
(22) Anmeldetag: 29.02.2012
(51) Int. Cl.: F16L 41/02, F16L 53/00

(54) **Verbinder für eine beheizbare Fluidleitung und beheizbare Fluidleitung**
Connector for a heatable fluid conduit and heatable fluid conduit
Connecteur pour une conduite de fluide pouvant être chauffée et conduite de fluide pouvant être chauffée

(30) Priorität: 20.05.2011 DE 102011102244
(43) Veröffentlichungstag der Anmeldung: 21.11.2012
(73) Patentinhaber: NORMA Germany GmbH, 63477 Maintal (DE)
(72) Erfinder: Eckardt, Carsten, 63486 Bruchköbel (DE); Mann, Stephan, 63599 Biebergemünd (DE); Rastetter, Marc, 63599 Biebergemünd (DE); Read, Cameron, Docklands Vic. 3008 (AU); Seibel, Knut, 63674 Altenstadt (DE)
(74) Vertreter: Patentanwälte Olbricht Buchhold Keulertz

(56) Entgegenhaltungen:
- EP-A2- 1 070 642
- US-A- 1 905 733
- US-A- 2 141 797
- US-A- 3 894 302
- US-A- 5 182 792

## Beschreibung

Die Erfindung betrifft einen Verbinder für eine beheizbare Fluidleitung mit ein Gehäuse, das einen Anschlussstutzen, der mit einem Rohr verbindbar ist, eine Anschlussgeometrie für ein Anschlusselement und einen Heizmittel-Austrittskanal aufweist, wobei sich ein Durchgangskanal durch den Anschlussstutzen zur Anschlussgeometrie erstreckt und der Heizmittel-Austrittskanal mit dem Durchgangskanal einen Winkel α ≠ 0° einschließt.

Ferner betrifft die Erfindung eine beheizbare Fluidleitung mit einem derartigen Verbinder.

Ein derartiger Verbinder ist aus US 5 182 792 A bekannt. Hier wird ein Heizleiter durch einen Führungskanal seitlich von außen in den Verbinder eingeführt. Der Führungskanal ist als Rohr ausgebildet, das abgedichtet durch eine seitliche Öffnung in der Wand des Verbinders geführt ist.

Die Erfindung wird im Folgenden anhand einer Fluidleitung erläutert, die verwendet wird, um Harnstoff von einem Vorratsbehälter zu einer Verbrauchsstelle zu transportieren. Harnstoff (Urea) wird bei Dieselmotoren verwendet, um die Emission von Stickoxiden zu verringern.

Wenn eine derartige Fluidleitung in einem Kraftfahrzeug eingebaut ist, dann besteht bei niedrigen Außentemperaturen die Gefahr, dass der Harnstoff in der Fluidleitung einfriert, so dass er nicht mehr fließen kann. Es ist daher bekannt, die Fluidleitung zu beheizen, beispielsweise mit einem durch das Rohr geführten Heizmittel.

In vielen Fällen besteht die Fluidleitung aus mehreren Abschnitten, die über Verbinder miteinander verbunden werden können. Auch wenn die Fluidleitung nur aus einem einzigen Abschnitt gebildet ist, benötigt sie in der Regel einen Verbinder, mit dessen Hilfe sie an die zu verbindenden Aggregate angeschlossen werden kann, beispielsweise einen Tank und eine Einspritzpumpe.

Das Heizmittel kann im Grunde nur die Länge des einzelnen Leitungsabschnitts aufweisen. Um dennoch eine möglichst vollständige Beheizung der Fluidleitung zu erreichen, wird das Heizmittel mit in den Verbinder eingeführt. Es muss aber aus dem Verbinder wieder herausgeführt werden, um die Anschlussgeometrie nicht zu stören.

Bei einem Verbinder, der einen im Wesentlichen geradlinig verlaufenden Durchgangskanal aufweist, muss das Heizmittel seitlich herausgeführt werden. Hierzu ist der Heizmittel-Austrittskanal vorgesehen, der unter einem Winkel ≠0° zum Durchgangskanal steht. Üblich sind Winkel von 20° bis 80°. Um das Heizmittel in den Heizmittel-Austrittskanal zu bewegen, muss man bei der Fertigung das Heizmittel durch den Stutzen einführen und von der Seite der Anschlussgeometrie ein Hilfswerkzeug einführen, das das Heizmittel so weit ablenkt, dass es durch den Heizmittel-Austrittskanal austreten kann. Dies macht die Fertigung aufwendig und störanfällig. Es besteht immer die Gefahr, dass das Werkzeug auch die Wand des Durchgangskanals beschädigt, was beispielsweise im Bereich der Anschlussgeometrie zu Undichtigkeiten führen kann.

US 3 894 302 A zeigt ein T-förmiges Anschlussstück, das in seinem Inneren an einer Abzweigung einen im Wesentlichen kegelförmigen Deflektor aufweist. Bei dem Deflektor handelt es sich um ein Abprallelement mit zwei Prallflächen. Mit dem Deflektor sollen bestimmte Strömungen bei der Ableitung von Abwasser aus Toiletten in Rohrleitungsabschnitten mit starkem Gefälle erzeugt werden.

US 2 141 797 A zeigt ein Fitting für Heizkörper, das mehrere Fluid-Anschlüsse aufweist, um einen Heizkörper im Nebenstrom an eine Heizmittelleitung anschließen zu können. Im Fitting ist eine etwa von der Mitte eines Durchgangskanals ausgehende gekrümmte Wand vorgesehen, durch die ein Teil der Strömung in einen seitlichen Austrittskanal abgeleitet oder von dort in den Durchgangskanal eingeleitet werden soll.

US 1 905 733 A zeigt einen Strömungsteiler mit einem Einlass und zwei Auslässen. Das durch den Einlass eintretende Fluid wird an einem Teilungselement n zwei Teilströme aufgeteilt. Das Teilungselement weist eine Spitze auf, auf die das einströmende Fluid auftrifft. Das Teilungselement ist um einen Drehpunkt gegen die Kraft von Federn verschwenkbar.

EP 1 070 642 A2 beschreibt eine Heizvorrichtung für eine Scheibenwaschanlage, bei der in eine Fluidleitung ein Heizleiter eingebracht ist. Dementsprechend weist dieser Verbinder einen Heizmittel-Austrittskanal auf, der mit dem Durchgangskanal einen Winkel α ≠ 0° einschließt. Allerdings ist im Durchgangskanal kein Rampenelement angeordnet.

Der Erfindung liegt die Aufgabe zugrunde, die Fertigung einer beheizbaren Fluidleitung einfach zu gestalten.

Diese Aufgabe wird mit Hilfe eines Verbinders der eingangs genannten Art dadurch gelöst, dass im Durchgangskanal ein einstückig mit dem Verbinder ausgebildetes Rampenelement angeordnet ist, das eine aus dem Durchgangskanal zum Heizmittel-Austrittskanal weisende Führungsfläche aufweist, die sich von der Seite des Durchgangskanals, die dem Heizmittel-Austrittskanal gegenüberliegt, bis zum Heizmittel-Austrittskanal erstreckt.

Das Rampenelement befindet sich permanent im Verbinder. Es ist in der Lage, das Heizmittel, das durch den Stutzen eingeführt wird, so abzulenken, dass es in den Heizmittel-Austrittskanal eintreten kann. Dies erfolgt dadurch, dass die Spitze des Heizmittels auf die Führungsfläche auftrifft und von der Führungsfläche in den Heizmittel-Austrittskanal gelenkt wird. Sobald das Heizmittel mit seiner Spitze in den Heizmittel-Austrittskanal gelangt ist, ist lediglich ein einfaches Weiterschieben des Heizmittels gegenüber dem Verbinder erforderlich, um das Heizmittel aus der Mündung des Heizmittel-Austrittskanals nach außen austreten zu lassen. Ein Verbinder mit Rampenelement benötigt nur unwesentlich mehr Material als Verbinder ohne Rampenelement. Dafür benötigt man bei der Fertigung der Fluidleitung kein Hilfswerkzeug mehr, das das Heizmittel in den Heizmittel-Austrittskanal leitet.

Vorzugsweise ist die Führungsfläche knickfrei ausgebildet. Die Führungsfläche ist also glatt, so dass die Spitze des Heizmittels auf der Führungsfläche entlang gleiten kann, um so die Bewegungsrichtung des Heizmittels in dem Heizmittel-Austrittskanal umzuleiten. Es gibt keine Stufen, an denen die Spitze hängen bleiben könnte. Dies erleichtert die Fertigung weiter.

Hierbei ist bevorzugt, dass das Rampenelement in einer Ebene, die durch den Durchgangskanal und den Heizmittel-Austrittskanal aufgespannt ist, den Durchgangskanal ausfüllt und in einer Ebene senkrecht dazu einen Strömungsquerschnitt im Durchgangskanal frei lässt. Damit wird die Spitze des Heizmittels, die durch den Stutzen zugeführt wird, über die gesamte "Höhe" des Durchgangskanals in Richtung auf den Heizmittel-Austrittskanal geführt. In dieser Richtung geht die Führungsfläche von einem Bereich in der Umfangswand des Durchgangskanals, der dem Heizmittel-Austrittskanal gegenüberliegt, bis zum Heizmittel-Austrittskanal durch. Gleichwohl bleibt ein ausreichender Strömungsquerschnitt im Durchgangskanal erhalten, um den Durchfluss des Fluids, im vorliegenden Fall des Harnstoffs, zu ermöglichen. Das Rampenelement füllt den Querschnitt des Durchgangskanals also nicht vollständig aus, sondern lässt ausreichende Öffnungen bestehen.

Vorzugsweise weist das Rampenelement eine Breite auf, die maximal 50 % der größten Breite des Durchgangskanals im Bereich des Rampenelements entspricht. Damit bleiben weitere 50 % der Breite für die Durchströmung des Fluids frei, werden also nicht durch das Rampenelement blockiert. Auch dann, wenn der Querschnitt des Durchgangskanals kreisförmig ist und das Rampenelement im Bereich des größten Durchmessers angeordnet ist, steht eine ausreichende Querschnittsfläche zur Verfügung, um das Fluid durch den Verbinder hindurchströmen zu lassen. Die Breite von maximal 50 % reicht hingegen aus, um eine ausreichend breite Führungsfläche für die Spitze des Heizmittels zu bieten. In vielen Fällen reicht auch eine geringere Breite aus, beispielsweise 33 % oder sogar nur 25 % der maximalen Breite.

Vorzugsweise ist das Rampenelement an beiden Enden der Führungsfläche mit dem Gehäuse verbunden. Damit wird die Führungsfläche mit ausreichenden Kräften so weit festgehalten, dass die Spitze des Heizmittels auf ihr entlang gleiten kann, ohne dass die Führungsfläche verlagert wird. Insbesondere kann die Führungsfläche nicht so kippen, dass die Führung der Spitze des Heizmittels in den Heizmittel-Austrittskanal unterbrochen wird. Vorzugsweise ist das Rampenelement einstückig mit dem Gehäuse ausgebildet. Das Rampenelement kann beispielsweise mit dem Gehäuse einstückig gespritzt sein, wenn das Gehäuse als Spritzgussteil ausgebildet ist. Damit ist für die Herstellung und das Einbringen des Rampenelements in den Verbinder praktisch kein zusätzlicher Aufwand mehr erforderlich.

Vorzugsweise setzt sich die Führungsfläche in einer Wand des Heizmittel-Austrittskanals fort. Auch beim Übergang der Führungsfläche in den Heizmittel-Austrittskanal gibt es also keine Stufen oder dergleichen, die beim Einführen des Heizmittels in den Verbinder und dann in den Heizmittel-Austrittskanal zu Störungen bei der Fertigung führen könnten.

Die Aufgabe wird durch eine beheizbare Fluidleitung mit einem Verbinder, wie oben beschrieben, und einem Rohr, das mit dem Anschlussstutzen verbunden ist, gelöst, wobei ein Heizmittel im Rohr angeordnet ist, das durch den Heizmittel-Austrittskanal aus dem Verbinder herausgeführt ist.

Wie oben geschildert, ist es durch das Rampenelement mit der Führungsfläche relativ einfach möglich, die Spitze des Heizmittels durch den Stutzen in das Innere des Verbinders einzuführen und aus dem Heizmittel-Austrittskanal austreten zu lassen, weil das Rampenelement dafür sorgt, dass beim Einschieben des Heizmittels in den Verbinder die Spitze zum Heizmittel-Austrittskanal umgelenkt wird.

Vorzugsweise weist das Heizmittel einen Durchmesser auf, der größer ist als ein größter Abstand zwischen dem Rampenelement und einer Wand des Durchgangskanals. Damit wird verhindert, dass das Heizmittel seitlich am Rampenelement vorbeitreten kann. In einem derartigen Fall würde die Spitze des Heizmittels nicht mehr auf dem Rampenelement geführt werden können. Wenn der Abstand zwischen dem Rampenelement und der Wand des Durchgangskanals aber entsprechend klein ist, ist auf jeden Fall sichergestellt, dass das Heizmittel durch das Rampenelement mit seiner Führungsfläche zum Heizmittel-Austrittskanal hin geführt wird.

Die Erfindung wird im Folgenden anhand eines bevorzugten Ausführungsbeispiels in Verbindung mit der Zeichnung beschrieben. Hierin zeigen:
- Fig. 1: einen schematischen Längsschnitt durch einen Verbinder mit einem verbundenen Rohr und
- Fig. 2: einen Schnitt II-II nach Fig. 1.

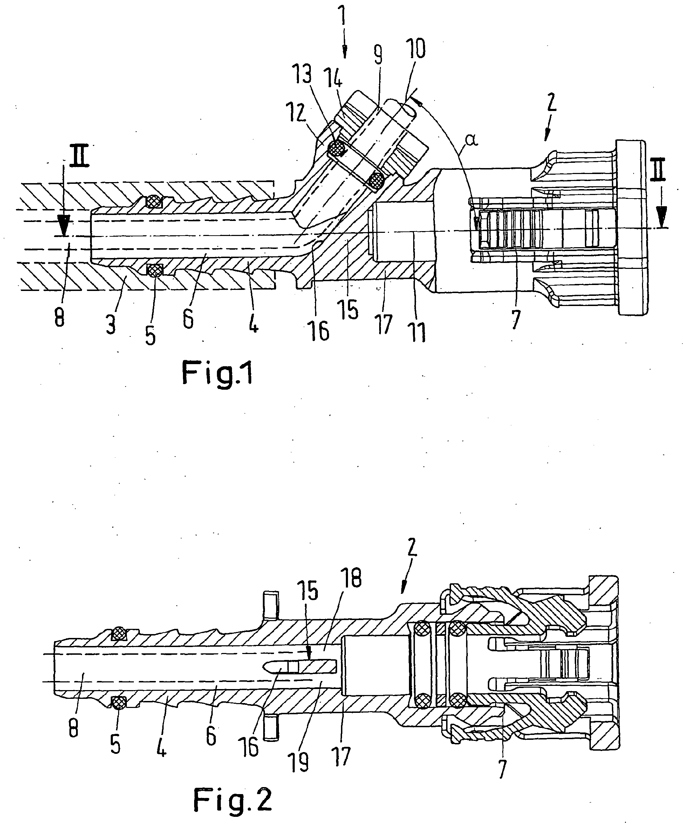

Fig. 1 zeigt eine beheizbare Fluidleitung 1 mit einem Verbinder 2 und einem Rohr 3. Das Rohr ist flexibel. Es kann aus einem extrudierten Kunststoff oder auch aus einem Schlauchmaterial gebildet sein. Auch ein Schlauch soll im Folgenden unter den Begriff "Rohr" fallen.

Das Rohr 3 ist auf einen Anschlussstutzen 4 des Verbinders aufgesteckt und dort mit einem O-Ring 5 abgedichtet. Der Anschlussstutzen 4 weist auf seiner Außenseite ein Tannenbaumprofil auf. Falls erforderlich, kann das Rohr 3 auf dem Anschlussstutzen 4 auch mit Hilfe eines Spannelements, beispielsweise einer Schlauchschelle oder dergleichen, festgehalten werden.

Durch den Anschlussstutzen 4 ist ein Durchgangskanal 6 geführt, der durch den gesamten Verbinder hindurch geradlinig verläuft und, wie dies in Fig. 2 zu erkennen ist, bis zu einer Anschlussgeometrie 7 geführt ist. Mit der Anschlussgeometrie 7 kann der Verbinder 2 an einem Verbindungsstutzen einer anderen Leitung, eines Tanks oder eines Aggregats befestigt werden. Die genaue Form der Anschlussgeometrie 7 spielt im vorliegenden Fall keine Rolle. Sie sollte aber so ausgebildet sein, dass eine Verbindung zwischen dem Verbinder 2 und einem Verbindungsstutzen eine ausreichende Festigkeit und Dichtigkeit aufweist.

Im freien Querschnitt des Rohres 3 ist ein gestrichelt dargestelltes Heizmittel 8 angeordnet. Das Heizmittel 8 ist im vorliegenden Fall als flexibler Heizstab ausgebildet, der mindestens einen Heizleiter aufweist, der in ein extrudiertes Kunststoffmaterial eingebettet ist. Vorzugsweise sind zwei Heizleiter vorgesehen, die an einem vom Verbinder 2 entfernten Ende miteinander verbunden sind, so dass eine elektrische Versorgung nur an einem Ende des Heizmittels notwendig ist. Das Heizmittel 8 ist zwar flexibel und biegbar. Es weist aber eine gewisse Eigensteifigkeit auf, so dass das Heizmittel dann, wenn das Rohr 3 (mit darin befindlichem Heizmittel) auf den Anschlussstutzen 4 aufgeschoben wird, das Heizmittel 8 in den Durchgangskanal 6 im Anschlussstutzen 4 eingeschoben werden kann.

Das Heizmittel 8 sollte den Verbinder 2 verlassen, bevor es die Anschlussgeometrie 7 erreicht, um eine mithilfe der Anschlussgeometrie 7 hergestellt Verbindung nicht zu stören. Dementsprechend weist der Verbinder einen Heizmittel-Austrittskanal 9 auf, dessen Längsachse 10 unter einem Winkel α zur Längsachse 11 des Durchgangskanals 6 liegt. Der Winkel α ist größer als 0° und liegt vorzugsweise im Bereich von 20° bis 80°.

Der Heizmittel-Austrittskanal 9 ist in einem Stutzen 12 angeordnet, der unter dem Winkel α zur Längsachse 11 des Durchgangskanals 6 gerichtet ist. Ein O-Ring 13 ist im Stutzen 12 vorgesehen. Der O-Ring 13 liegt dichtend am Heizmittel 8 an und verhindert einen Austritt von Fluid aus dem Heizmittel-Austrittskanal. Der O-Ring 13 wird mithilfe eines Stopfens 14 im Heizmittel-Austrittskanal 9 festgehalten, der im Stutzen 12 angeordnet ist. Der Stopfen 14 hält den O-Ring allerdings nur am Platz. Er verpresst ihn also nicht.

Wie oben erläutert, weist das Heizmittel 8 eine gewisse Eigensteifigkeit auf. Man benötigt also kein Hilfsmittel, um das Heizmittel 8, dessen Spitze im Wesentlichen entlang der Längsachse 11 durch den Durchgangskanal 6 geführt wird, so umzulenken, dass es durch den Heizmittel-Austrittskanal 9 austritt. Hierzu ist im Durchgangskanal 6 ein Rampenelement 15 angeordnet, das insbesondere in Fig. 2 zu erkennen ist. Das Rampenelement 15 ist einstückig mit dem Verbinder 2 ausgebildet. Wenn der Verbinder 2 als Spritzgussteil ausgebildet ist, dann wird das Rampenelement 15 beim Spritzgießen gleich mit erzeugt.

Das Rampenelement 15 weist eine Führungsfläche 16 auf, die gekrümmt ist, also knickfrei ausgebildet ist. Die Führungsfläche 16 erstreckt sich von der "Unterseite" des Durchgangskanals 6, also der Seite, die dem Heizmittel-Austrittskanal 9 gegenüberliegt, bis zum Heizmittel-Austrittskanal 9 und setzt sich in einer Wand des Heizmittel-Austrittskanals 9 fort. Die Spitze des Heizmittels 8 kann also auf der Führungsfläche 16 entlang gleiten, ohne durch Stufen, Knicke, Rillen oder dergleichen behindert zu werden. Wenn man das Heizmittel 8 durch den Anschlussstutzen 4 in den Durchgangskanal 6 einführt, dann wird die Spitze durch die Führungsfläche 16 des Rampenelements 15 so umgelenkt, dass sie automatisch in den Heizmittel-Austrittskanal 9 gelangt.

In der Ebene der Schnittansicht nach Fig. 1, also in einer Ebene, die durch die Längsachse 11 des Durchgangskanals 6 und die Längsachse 10 des Heizmittel-Austrittskanals 9 aufgespannt ist, füllt das Rampenelement 15 den Durchgangskanal 6 vollständig aus. Das Rampenelement 15 ist also an den beiden Enden der Führungsfläche 16 mit dem Gehäuse 17 des Verbinders 2 verbunden. Es besteht also nicht die Gefahr, dass das Rampenelement 15 kippt, wenn es durch die Spitze des Heizmittels 8 mit Kraft beaufschlagt wird. Wie insbesondere in Fig. 2 zu erkennen ist, füllt das Rampenelement 15 den Durchgangskanal 6 allerdings nicht vollständig aus. Vielmehr lässt es quer zu der in Fig. 1 gezeigten Ebene zwei Strömungsquerschnitte 18, 19 frei, durch die im Betrieb das Fluid nach wie vor strömen kann. Das Rampenelement 15 verringert den freien Querschnitt des Durchgangskanals 6 zwar etwas. Es lässt aber immer noch genügend Querschnitt für die Strömung des Fluids frei.

Es ist zu erkennen, dass die beiden Strömungsquerschnitte 18, 19 eine Breite aufweisen, die geringer ist als der Durchmesser des Heizmittels 8. Dementsprechend ist auf jeden Fall dafür gesorgt, dass das Heizmittel 8 durch die Führungsfläche 16 in Richtung auf den Heizmittel-Austrittskanal 9 umgelenkt wird, wenn das Heizmittel 8 in den Verbinder 2 eingeführt wird. Andererseits weist das Rampenelement 15 eine Breite auf, die maximal 50 % der größten Breite des Durchgangskanals 6 im Bereich des Rampenelements 15 entspricht.

Wenn das Heizmittel keinen kreisförmigen Querschnitt und dementsprechend keinen eigentlichen Durchmesser hat, dann ist die Breite des Heizmittels 8 in Breitenrichtung der Strömungsquerschnitte 18, 19 größer als die Breite der Strömungsquerschnitte 18, 19, so dass auch in diesem Fall zuverlässig sichergestellt ist, dass das Heizmittel beim Einschieben in den Verbinder durch das Rampenelement 15 umgelenkt wird.

Die Fertigung einer beheizbaren Fluidleitung 1 mit einem derartigen Verbinder 2 gestaltet sich relativ einfach. Man muss lediglich das Rohr 3 mit dem Heizmittel 8 vorkonfektionieren, so dass das Heizmittel 8 mit einer vorbestimmten Länge aus dem Rohr 3 herausragt. Bevor man also das Rohr 3 auf den Anschlussstutzen 4 aufschiebt, gelangt das Heizmittel 8 bereits in den Durchgangskanal 6 im Innern des Anschlussstutzens 4. Wenn dann das Rohr 3 und das Heizmittel 8 gemeinsam weiterbewegt werden, um das Rohr 3 auf den Anschlussstutzen 4 aufzuschieben, dann wird die Spitze des Heizmittels 8 durch die Führungsfläche 16 am Rampenelement 15 umgelenkt, so dass diese Spitze in den Heizmittel-Austrittskanal 9 gelangt und dort aus dem Verbinder 2 austreten kann.

Natürlich ist es auch möglich, zunächst das Heizmittel 8 alleine in den Verbinder 2 einzusetzen und dann das Rohr 3 über das Heizmittel 8 zu führen und auf den Anschlussstutzen 4 aufzuschieben.

## Patentansprüche

1. Verbinder für eine beheizbare Fluidleitung (1) mit ein Gehäuse (17), das einen Anschlussstutzen (4), der mit einem Rohr (3) verbindbar ist, eine Anschlussgeometrie (7) für ein Anschlusselement und einen Heizmittel-Austrittskanal (9) aufweist, wobei sich ein Durchgangskanal (6) durch den Anschlussstutzen (4) zur Anschlussgeometrie (7) erstreckt und der Heizmittel-Austrittskanal (9) mit dem Durchgangskanal (6) einen Winkel α ≠ 0° einschließt, wobei im Durchgangskanal (6) ein einstückig mit dem Gehäuse (17) ausgebildetes Rampenelement (15) angeordnet ist, das eine aus dem Durchgangskanal (6) zum Heizmittel-Austrittskanal (9) weisende Führungsfläche (16) aufweist, wobei das Rampenelement (15) in einer Ebene, die durch den Durchgangskanal (6) und den Heizmittel-Austrittskanal (9) aufgespannt ist, den Durchgangskanal (6) ausfüllt und in einer Ebene senkrecht dazu einen Strömungsquerschnitt (18, 19) im Durchgangskanal (6) frei lässt, wobei das Rampenelement an beiden Enden der Führungsfläche (16) mit dem Gehäuse (17) verbunden ist, wobei das Rampenelement (15) eine Breite aufweist, die maximal 50 % der größten Breite des Durchgangskanals (6) im Bereich des Rampenelements (15) entspricht.

2. Verbinder nach Anspruch 1, **dadurch gekennzeichnet, dass** die Führungsfläche (16) knickfrei ausgebildet ist.

3. Verbinder nach einem der Ansprüche 1 bis 2, **dadurch gekennzeichnet, dass** sich die Führungsfläche (16) in einer Wand des Heizmittel-Austrittskanals (9) fortsetzt.

4. Beheizbare Fluidleitung (1) mit einem Verbinder (2) nach einem der Ansprüche 1 bis 3 und einem Rohr (3), das mit dem Anschlussstutzen (4) verbunden ist, wobei ein Heizmittel (8) im Rohr (3) angeordnet ist, das durch den Heizmittel-Austrittskanal (9) aus dem Verbinder (2) herausgeführt ist.

5. Fluidleitung nach Anspruch 4, **dadurch gekennzeichnet, dass** das Heizmittel (8) einen Durchmesser aufweist, der größer ist als ein größter Abstand zwischen dem Rampenelement (15) und einer Wand des Durchgangskanals (6).

## Claims

1. A connector for a heatable fluid line (1) with a housing (17), the housing (17) comprising a connecting piece (4) that may be connected to a pipe (3), a connection geometry (7) for a connection element, and a heater outlet channel (9), whereby a through-channel (6) extends through the connecting piece (4) to the connection geometry (7) and the heater outlet channel (9) is arranged at an angle α ≠ 0° relative to the through-channel (6), whereby a ramp element (15) formed as one piece with the housing (17) is arranged in the through-channel (6), the ramp element (15) having a guide surface (16) oriented to point out of the through-channel (6) towards the heater outlet channel (9), whereby the ramp element (15) fills the through-channel (6) in a plane that spans the through-channel (6) and the heater outlet channel (9), and in a perpendicular plane leaves a flow cross section (18, 19) in the through-channel (6) free, whereby the ramp element is connected with the housing (17) at both ends of the guide surface (16), whereby the ramp element (15) comprises a breadth, which corresponds to a maximum of 50% of the largest breadth of the through-channel (6) in the region of the ramp element (15).

2. A connector according to claim 1, **characterized in that** the guide surface (16) is formed kink-free.

3. A connector according to one of the claims 1 to 2, **characterized in that** the guide surface (16) continues in a wall of the heater outlet channel (9).

4. A heatable fluid line (1) with a connector (2) according to one of the claims 1 to 3 and a pipe (3), which is connected with the connecting piece (4), whereby a heater (8) is arranged in the pipe (3) that is led out of the connector (2) through the heater outlet channel (9).

5. A fluid line according to claim 4, **characterized in that** the heater (8) comprises a diameter which is larger than a largest distance between the ramp element (15) and a wall of the through-channel (6).

## Revendications

1. Raccord pour une conduite de fluide (1) pouvant être chauffée, avec une enveloppe (17) qui comporte un embout de raccordement (4) qui peut être raccordé à un tuyau (3), une géométrie de raccordement (7) pour un élément de raccordement et un canal de sortie de fluide de chauffage (9), un canal de passage (6) s'étendant à travers l'embout de raccordement (4) jusqu'à la géométrie de raccordement (7) et le canal de sortie de fluide de chauffage (9) formant avec le canal de passage (6) un angle α≠0°,
un élément en rampe (15) conçu d'une seule pièce avec l'enveloppe (17) étant agencé dans le canal de passage (6), lequel élément en rampe comporte une surface de guidage (16) qui mène du canal de passage (6) au canal de sortie de fluide de chauffage (9), l'élément en rampe (15) remplissant le canal de passage (6) dans un plan qui passe par le canal de passage (6) et par le canal de sortie de fluide de chauffage (9) et laissant libre une section transversale d'écoulement (18, 19) dans le canal de passage (6) dans un plan perpendiculaire au précédent, l'élément en rampe étant assemblé à l'enveloppe (17) au niveau des deux extrémités de la surface de guidage (16), l'élément en rampe (15) ayant une largeur qui correspond au maximum à 50% de la plus grande largeur du canal de passage (6) dans la zone de l'élément en rampe (15).

2. Raccord selon la revendication 1, **caractérisé en ce que** la surface de guidage (16) est conçue sans coude.

3. Raccord selon l'une des revendications 1 à 2, **caractérisé en ce que** la surface de guidage (16) se poursuit en une paroi du canal de sortie de fluide de chauffage (9).

4. Conduite de fluide (1) pouvant être chauffée, avec un raccord (2) selon l'une des revendications 1 à 3 et avec un tuyau (3) qui est raccordé à l'embout de raccordement (4), un fluide de chauffage (8) qui est guidé hors du raccord (2) via le canal de sortie de fluide de chauffage (9) étant placé dans le tuyau (3).

5. Conduite de fluide selon la revendication 4, **caractérisée en ce que** le fluide de chauffage (8) a un diamètre qui est supérieure à la plus grande distance entre l'élément en rampe (15) et une paroi du canal de passage (6).
